# FASCICULE DE BREVET EUROPEEN

(11) **EP 2 567 531 B1**
(45) Date de publication et mention de la délivrance du brevet: **02.08.2017**
(21) Numéro de dépôt: 11716430.1
(22) Date de dépôt: 29.04.2011
(51) Int. Cl.: H04L 29/08, G06F 21/30, H04L 29/06

(54) **PROCÉDÉ ET MACHINE DE GESTION POUR L'OUVERTURE DE SESSION D'UNE MACHINE APPARTENANT Á UN PARC DE MACHINES**
VERFAHREN UND VERWALTUNGSMASCHINE ZUR ERÖFFNUNG EINER SITZUNG EINER MASCHINE EINES MASCHINENSETS
METHOD AND MANAGEMENT MACHINE FOR OPENING A SESSION OF A MACHINE BELONGING TO A MACHINE SET

(30) Priorité: 03.05.2010 FR 1053429
(43) Date de publication de la demande: 13.03.2013
(73) Titulaire: Evidian, 78340 Les Clayes-Sous-Bois (FR)
(72) Inventeur: DEDIEU, Gérard, 78180 Montigny Le Bretonneux (FR)
(74) Mandataire: Camus, Olivier Jean-Claude
(86) Numéro de dépôt international: PCT/EP2011/056831
(87) Numéro de publication internationale: WO 2011/138240

(56) Documents cités:
- US-A1- 2005 080 906
- US-A1- 2006 277 536
- US-A1- 2007 162 605
- US-A1- 2007 169 175
- ANONYMOUS: "Symantec pcAnywhere Solution User Guide Version 12.5", , [Online] 25 février 2010 (2010-02-25), pages 1-63, XP002607050, Symantec Extrait de l'Internet: URL:http://www.symantec.com/business/suppo rt/index?page=content&id=DOC1799> [extrait le 2011-10-26]

## Description

La présente invention concerne un procédé d'ouverture de session d'une première machine par des moyens de contrôle de sessions.

Elle trouve une application particulière, mais non limitative, dans le domaine hospitalier.

### ARRIÈRE-PLAN TECHNOLOGIQUE DE L'INVENTION

Un procédé d'ouverture de session d'une première machine par des moyens de contrôle de sessions, connu de l'homme du métier, permet d'ouvrir une session par un utilisateur avec son identifiant utilisateur (couramment appelé en anglais « login ») qui comprend en général un nom d'utilisateur et un mot de passe associé.

Dans le domaine hospitalier, un parc de machines comprenant une pluralité de machines est couramment utilisé. Les différentes machines comprennent des applications communes et une machine peut également comprendre une ou plusieurs applications qui lui sont propres.

Plusieurs opérateurs tels que les médecins ou les infirmières peuvent avoir accès aux différentes machines afin d'accéder aux applications communes et aux applications propres à chaque machine. Pour y accéder ils ouvrent une session avec leur « login ».

Ainsi, dans une journée, un opérateur peut ouvrir une session utilisateur sur plusieurs machines du parc de machines.

Un inconvénient de cet état de la technique est que souvent un opérateur oublie de sortir de sa session après utilisation de la machine. En conséquence, un autre opérateur peut utiliser les applications de la machine via une session utilisateur qui n'est pas la sienne et a donc accès à des applications de manière non autorisée.

L'état de la technique est par exemple connu de par US2005/080906 A1 et US2007/162605 A1.

### DESCRIPTION GENERALE DE L'INVENTION

La présente invention a pour but un procédé d'ouverture de session d'une première machine par des moyens de contrôle de sessions, qui permette de résoudre le problème énoncé ci-dessus. La présente invention est définie par les revendications indépendantes 1, 8 et 9.

Ce but est atteint par un procédé d'ouverture de session d'une première machine par des moyens de contrôle de sessions pour un parc de machines comprenant au moins ladite première machine et une deuxième machine, ladite deuxième machine comportant des moyens de sécurité, le procédé comportant les étapes de :
- recevoir par les moyens de contrôle de sessions une requête d'ouverture de session de ladite première machine, ladite requête comprenant au moins une information d'identification d'un utilisateur ;
- vérifier par les moyens de contrôle de sessions si ladite au moins information d'identification dudit utilisateur est associée dans un référentiel à une donnée d'identification de ladite deuxième machine ;
- contrôler par les moyens de contrôle de sessions si l'utilisateur a le droit d'ouvrir une session sur la première machine ;
- dans l'affirmative de ladite vérification et dudit contrôle, envoyer par les moyens de contrôle de sessions audit service de sécurité de ladite deuxième machine une requête de modification d'état de session de ladite deuxième machine ; et
- si la modification d'état de session de la deuxième machine se réalise, envoyer par les moyens de contrôle de sessions à la première machine une requête d'autorisation d'ouverture de session ; et
- sauvegarder dans ledit référentiel par le service de contrôle de sessions ladite au moins information d'identification dudit utilisateur associée à une donnée d'identification de ladite première machine.

Comme on va le voir en détail par la suite, le fait de vérifier si un utilisateur a déjà une session d'ouverte sur une autre machine et de modifier son état de session avant de permettre d'ouvrir une autre session sur une autre machine permet de sécuriser la machine qui n'est plus utilisée par l'utilisateur.

Selon des modes de réalisation non limitatifs, le procédé peut comporter en outre une ou plusieurs caractéristiques supplémentaires parmi les suivantes :
- La requête de modification d'état de session est de type verrouillage de session ou fermeture de session.
- Le type d'une requête de modification d'état de session est paramétré dans les moyens de contrôle de session. Ainsi, la fermeture ou le verrouillage d'une session sur la deuxième machine est décidé en amont par un administrateur du parc de machine.
- Le procédé comporte une étape supplémentaire d'envoyer par la première machine aux moyens de contrôle de session une requête de paramétrage comprenant le type de la requête de modification d'état de session. Ainsi, le choix est laissé à l'utilisateur qui accède à la première machine de verrouiller ou fermer la session ouverte sur la deuxième machine.
- Le procédé comporte une étape supplémentaire d'envoyer par les moyens de contrôle de sessions auxdits moyens de sécurité de ladite deuxième machine une requête de modification d'état de session de ladite deuxième machine qui est de type verrouillage de session si la modification d'état de session de la deuxième machine correspondant à une fermeture de session échoue. Cela permet de sécuriser la deuxième machine en verrouillant la session ouverte sur cette machine, même si la fermeture de session échoue.
- Une requête reçue ou émise par les moyens de contrôle de sessions est une requête TCP/IP ou UDP. Cela permet une communication entre deux machines d'un même réseau informatique.
- Le procédé il comporte une étape supplémentaire d'envoyer un message applicatif de modification d'état de session correspondant à la requête de modification d'état de session à un module de gestion de session de la deuxième machine. Cela permet au module de gestion de session de procéder au verrouillage/fermeture de la deuxième machine.
- Le procédé comporte une étape supplémentaire d'envoyer un message applicatif de modification d'état de session correspondant à la requête de modification d'état de session à un greffon d'un module de gestion de session de la deuxième machine. Cela évite de modifier l'interface utilisateur de gestion de session qui est comprise dans le module de gestion de session de la deuxième machine.
- Les étapes de vérification et d'envoi de la requête de modification d'état de session sont effectuées pour toute machine appartenant au parc de machines et différente de la première machine. Cela permet de sécuriser l'ensemble des machines du parc de machines sur lesquelles une session de l'utilisateur est ouverte.

L'invention concerne également un produit programme comportant une ou plusieurs séquences d'instructions exécutables par une unité de traitement d'information, l'exécution desdites séquences d'instructions permettant une mise en oeuvre du procédé d'ouverture de session selon l'une quelconque des caractéristiques précédentes, lorsqu'il est chargé sur un ordinateur.

L'invention concerne également une machine de gestion d'un parc de machines adaptée pour effectuer une ouverture de session d'une première machine par des moyens de contrôle de sessions pour ledit parc de machines comprenant au moins ladite première machine et une deuxième machine, ladite deuxième machine comportant des moyens de sécurité, ladite machine de gestion comprenant lesdits moyens de contrôle de sessions, lesdits moyens de contrôle de sessions étant adaptés pour :
- recevoir une requête d'ouverture de session de ladite première machine, ladite requête comprenant au moins une information d'identification d'un utilisateur ;
- vérifier si ladite au moins information d'identification dudit utilisateur est associée dans un référentiel à une donnée d'identification de ladite deuxième machine ;
- contrôler si l'utilisateur a le droit d'ouvrir une session sur la première machine ;
- dans l'affirmative de ladite vérification et dudit contrôle, envoyer auxdits moyens de sécurité de ladite deuxième machine une requête de modification d'état de session de ladite deuxième machine ;
- si la modification d'état de session de la deuxième machine se réalise, envoyer à la première machine une requête d'autorisation d'ouverture de session ; et
- sauvegarder dans ledit référentiel ladite au moins information d'identification dudit utilisateur associée à une donnée d'identification de ladite première machine.

L'invention concerne également un système informatique adapté pour effectuer une ouverture de session d'une première machine par des moyens de contrôle de sessions pour un parc de machines comprenant au moins ladite première machine et une deuxième machine, ladite deuxième machine comportant des moyens de sécurité, ledit système comprenant :
- les moyens de contrôle de sessions adaptés pour coopérer avec la première machine et la deuxième machine, lesdits moyens de contrôle de sessions étant adaptés pour :
   - recevoir une requête d'ouverture de session de ladite première machine, ladite requête comprenant au moins une information d'identification d'un utilisateur ;
   - vérifier si ladite au moins information d'identification dudit utilisateur est associée dans un référentiel à une donnée d'identification de ladite deuxième machine ;
   - contrôler si l'utilisateur a le droit d'ouvrir une session sur la première machine ;
   - dans l'affirmative de ladite vérification et dudit contrôle, envoyer auxdits moyens de sécurité de ladite deuxième machine une requête de modification d'état de session de ladite deuxième machine ;
   - si la modification d'état de session de la deuxième machine se réalise, envoyer à la première machine une requête d'autorisation d'ouverture de session ; et
   - sauvegarder dans ledit référentiel ladite au moins information d'identification dudit utilisateur associée à une donnée d'identification de ladite première machine ;
- ladite deuxième machine adaptée pour recevoir des moyens de contrôle de sessions via lesdits moyens de sécurité une requête de modification d'état de session ; et
- ladite première machine adaptée pour :
   - émettre une requête d'ouverture de session vers lesdits moyens de contrôle de sessions ; et
   - si la modification d'état de session de la deuxième machine se réalise, recevoir desdits moyens de contrôle de sessions une requête d'autorisation d'ouverture de session.

Selon un mode de réalisation non limitatif, le module de gestion de session de la deuxième machine comporte un greffon.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig.1a est un organigramme du procédé d'ouverture de session selon l'invention selon un premier mode de réalisation non limitatif ;
- La Fig.1b est un organigramme du procédé d'ouverture de session de la Fig. 1 a comprenant en outre deux étapes supplémentaires ;
- La Fig.1c est un organigramme du procédé d'ouverture de session de la Fig. 1b comprenant une étape supplémentaire de paramétrage d'un type de requête de modification de session ;
- La Fig.1d est un organigramme du procédé d'ouverture de session selon l'invention selon un deuxième mode de réalisation non limitatif ;
- La Fig.2a est une première représentation schématique d'un système informatique selon un premier mode de réalisation, comprenant une première machine, une deuxième machine, et des moyens de contrôle de sessions compris dans une machine de gestion, les moyens de contrôle de sessions étant adaptés pour mettre en oeuvre le procédé d'ouverture de session des figures 1 a à 1 c ;
- La Fig.2b est une représentation schématique d'un système informatique selon un deuxième mode de réalisation, comprenant une première machine, une deuxième machine, et des moyens de contrôle de sessions compris dans la deuxième machine, les moyens de contrôle de sessions étant adaptés pour mettre en oeuvre le procédé d'ouverture de session des figures 1 a à 1 c ;
- La Fig.3 illustre schématiquement des échanges de requêtes et de messages entre une première machine et des moyens de contrôle de sessions du système informatique de la Fig. 2a, selon un mode de réalisation non limitatif du procédé d'ouverture de session des figures 1a à 1c ;
- La Fig.4 est une deuxième représentation schématique d'un système informatique selon le premier mode de réalisation de la Fig.2a ; et
- La Fig.5 est une deuxième représentation schématique d'un système informatique selon le deuxième mode de réalisation de la Fig.2a.

### DESCRIPTION DE MODES DE REALISATION DE L'INVENTION

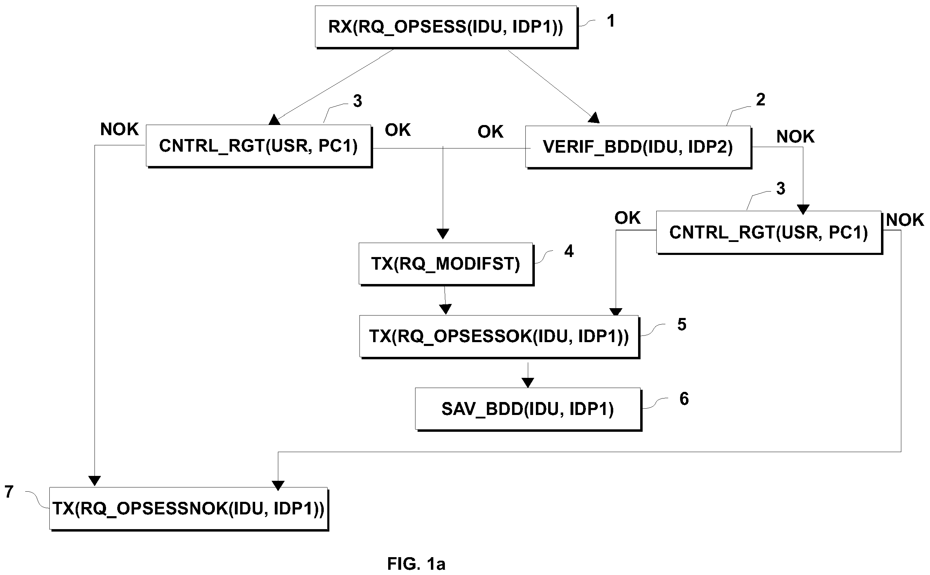

Le procédé d'ouverture de session d'une première machine par des moyens de contrôle de sessions d'un parc de machines comprenant au moins ladite première machine et une deuxième machine, ladite deuxième machine comportant des moyens de sécurité, est décrit dans un mode de réalisation non limitatif aux figures 1a à 1d.

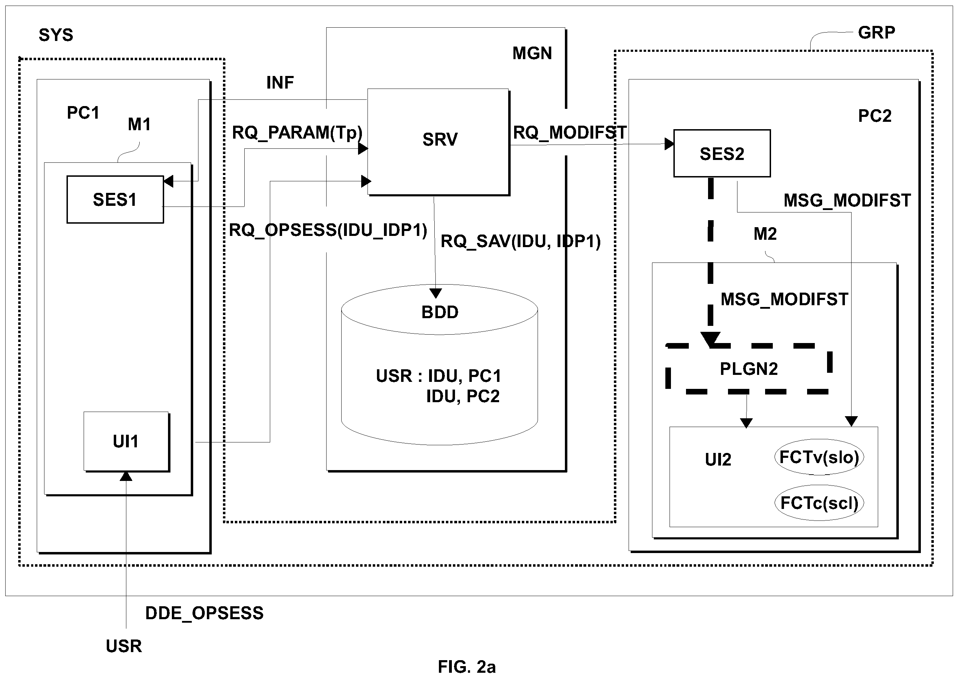

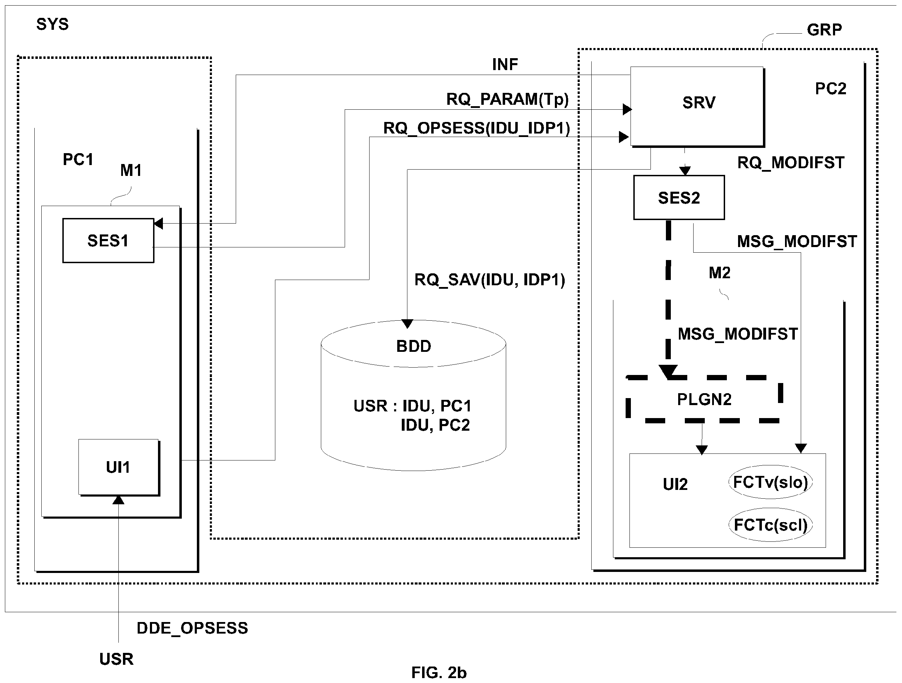

Le procédé d'ouverture de session est mis en oeuvre par des moyens de contrôle de sessions SRV représenté à la Fig. 2a et à la Fig. 2b, ces moyens de contrôle de sessions SRV étant également appelés service de contrôle de sessions. Dans la suite de la description, les deux termes seront utilisés indifféremment. Les moyens de contrôle de sessions SRV sont un produit programme d'ordinateur.

De la même manière, les moyens de sécurité sont également appelés service de sécurité. Dans la suite de la description, les deux termes seront utilisés indifféremment. Les moyens de sécurité sont un produit programme d'ordinateur.

Par machine, on entend tout matériel informatique comprenant une interface utilisateur par laquelle un utilisateur peut s'authentifier avec son identifiant et son mot de passe (couramment appelé « login » en anglais). Dans des exemples non limitatifs, une machine peut être un poste de travail individuel ou un serveur.

Dans un premier mode de réalisation illustré sur la Fig. 2a, ce service de contrôle de sessions SRV est compris dans une machine de gestion MGN du parc de machines. Cette dernière fait partie d'un système informatique SYS comprenant également la première machine PC1 et la deuxième machine PC2.

Dans un deuxième mode de réalisation illustré sur la Fig. 2b, ce service de contrôle de sessions SRV est compris dans la deuxième machine PC2. Ce deuxième mode évite d'avoir une machine de gestion MGN supplémentaire telle qu'un serveur.

Lorsqu'un utilisateur USR veut accéder à la deuxième machine PC2, il se connecte sous une session utilisateur qui lui est propre via un identifiant qui lui est propre et un mot de passe associé, le tout formant le « login ». La connexion (appelée également ouverture d'une session) se fait via une interface utilisateur de gestion de session UI2 qui est un composant de l'interface utilisateur (non représentée) de la machine.

Dans la suite de la description, on utilisera indifféremment le terme session utilisateur ou le terme session.

Lorsque le même utilisateur USR veut accéder à la première machine PC1, il se connecte sous une session utilisateur qui lui est propre via le même « login ». La connexion (appelée également ouverture d'une session sur la machine) se fait via une interface utilisateur de gestion de session UI1 qui est un composant de l'interface utilisateur (non représentée) de la machine.

Lors de cet essai de connexion qui correspond à une demande d'ouverture de session DDE_OPSESS de la part de l'utilisateur, la première machine PC1 émet une requête d'ouverture de session RQ_OPSESS vers le service de contrôle de sessions SRV.

A ce moment, le procédé d'ouverture de session est mis en oeuvre.

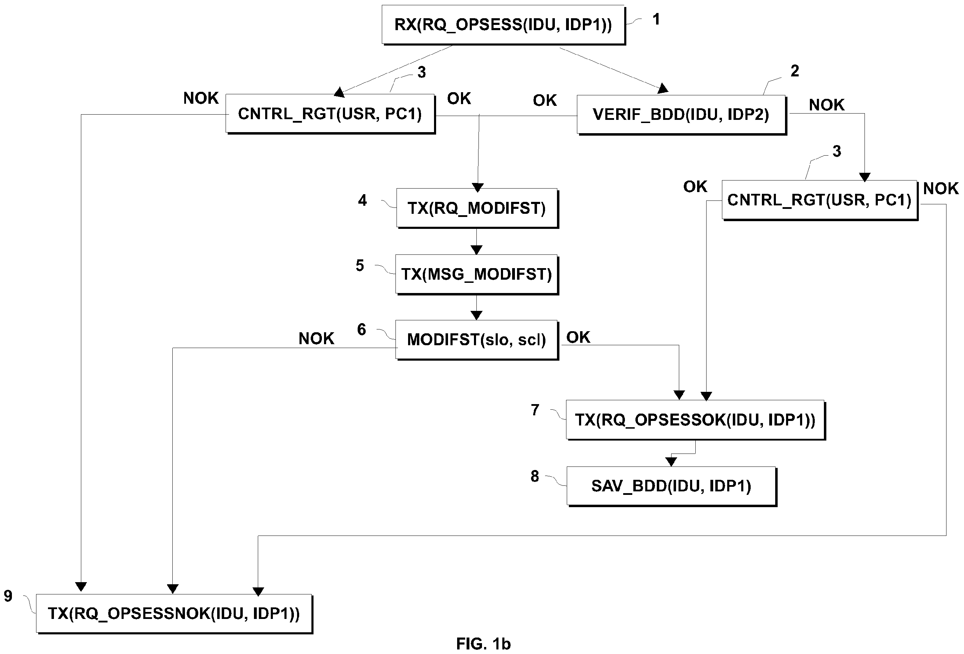

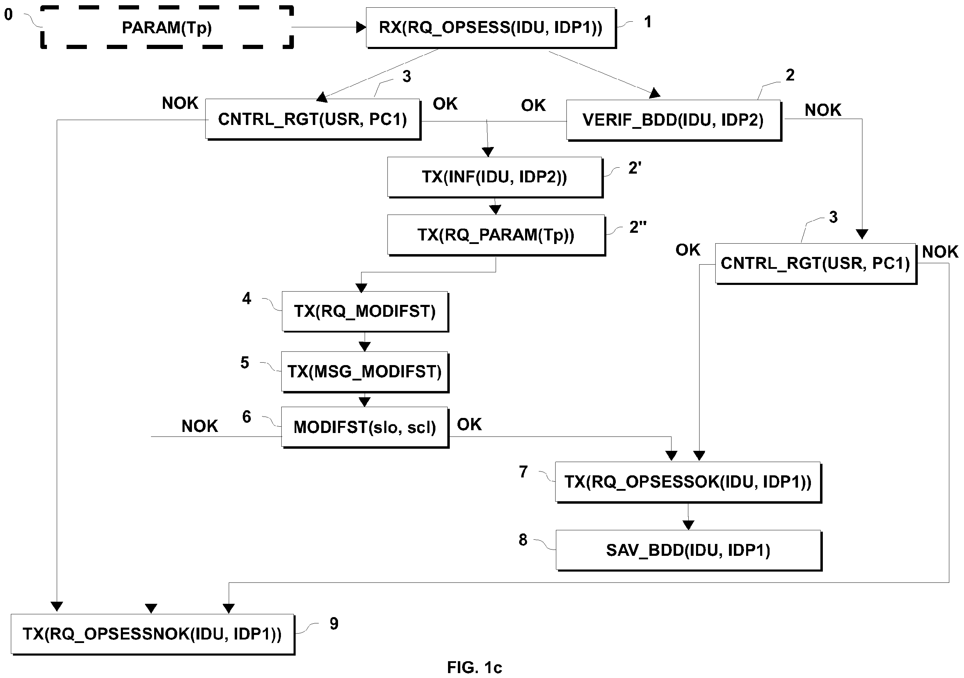

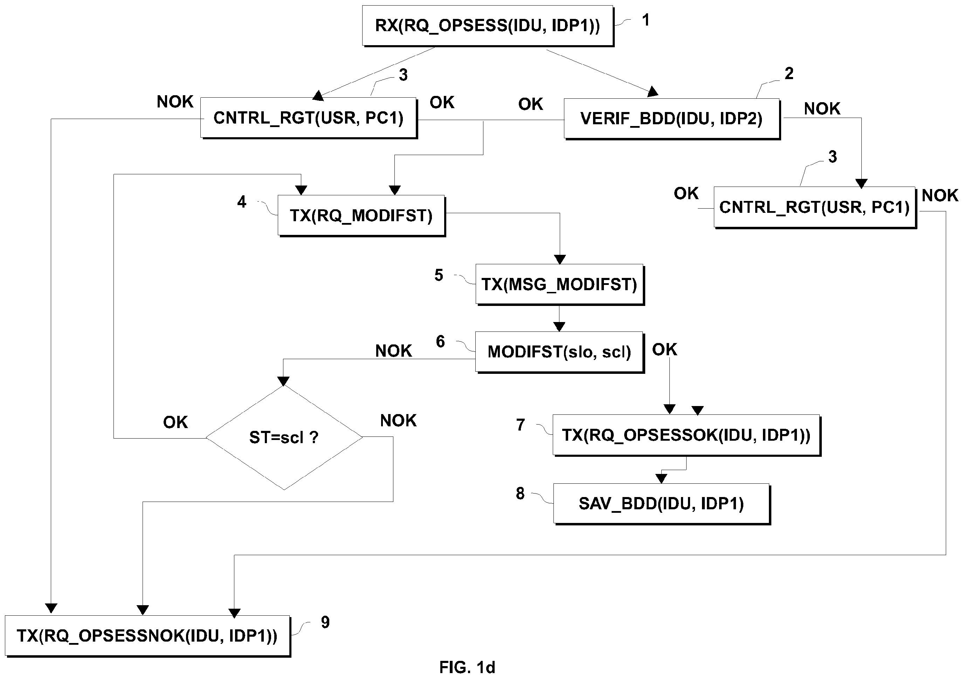

Il comporte les étapes suivantes, telles qu'illustrées à la Fig. 1.
- recevoir par le service de contrôle de sessions SRV une requête d'ouverture de session RQ_OPSESS de ladite première machine PC1, ladite requête comprenant au moins une information d'identification IDU d'un utilisateur USR (étape RX(RQ_OPSESS(IDU, IDP1))) ;
- vérifier par le service de contrôle de sessions SRV si ladite au moins information d'identification IDU dudit utilisateur USR est associée dans un référentiel BDD à une donnée d'identification IDU de ladite deuxième machine PC2 (étape VERIF_BDD(IDU, IDP2)) ;
- contrôler par le service de contrôle de sessions SRV si l'utilisateur USR a le droit d'ouvrir une session sur la première machine PC1 (étape CNTRL_RGT(USR, PC1)) ;
- dans l'affirmative de ladite vérification et dudit contrôle, envoyer par le service de contrôle de sessions SRV audit service de sécurité SES2 de ladite deuxième machine PC2 une requête de modification d'état de session RQ_MODIFST de ladite deuxième machine PC2 (étape TX(RQ_MODIFST)) ,
- si la modification d'état de session de la deuxième machine PC2 se réalise, envoyer par le service de contrôle de sessions SRV à la première machine PC1 une requête d'autorisation d'ouverture de session RQ_OPSESSOK (étape TX(RQ_OPSESSOK(IDU, IDP1))) ;
- sauvegarder dans ledit référentiel BDD par le service de contrôle de sessions SRV ladite au moins information d'identification IDU dudit utilisateur USR associée à une donnée d'identification IDP de ladite première machine PC1 (étape SAV_BDD(IDU, IDP1))).

Dans un mode de réalisation non limitatif, la requête de modification d'état de session RQ_MODIFST est de type Tp verrouillage de session (état de session verrouillé, ST = slo) ou fermeture de session (état de session fermé, ST = scl).
On notera qu'on entend par verrouillage d'une machine, le fait de verrouiller une session utilisateur qui est déverrouillée.

Dans un mode de réalisation non limitatif, le procédé d'ouverture de session comporte une étape supplémentaire d'envoyer un message applicatif de modification d'état de session MSG_MODIFST correspondant à la requête de modification d'état de session RQ_MODIFST à un module de gestion de session M2 de la deuxième machine PC2.

Dans un mode de réalisation non limitatif, le procédé d'ouverture de session comporte une étape supplémentaire selon laquelle le module de gestion de session M2 de la deuxième machine PC2 procède à la modification d'état de session de ladite deuxième machine PC2.

Pour la suite de la description, dans le mode de réalisation non limitatif du procédé décrit, le procédé comprend ces modes de réalisation non limitatifs.

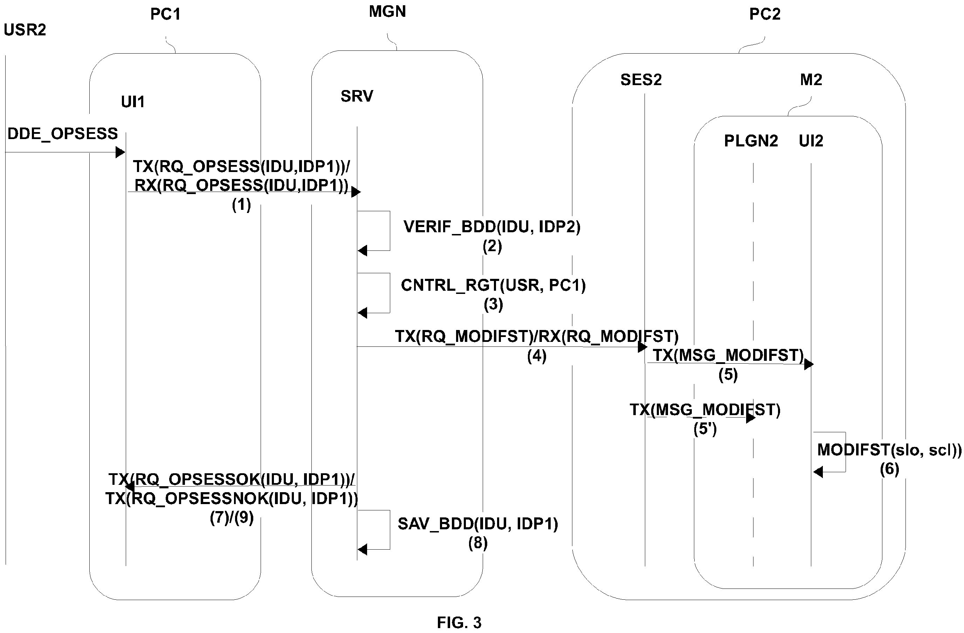

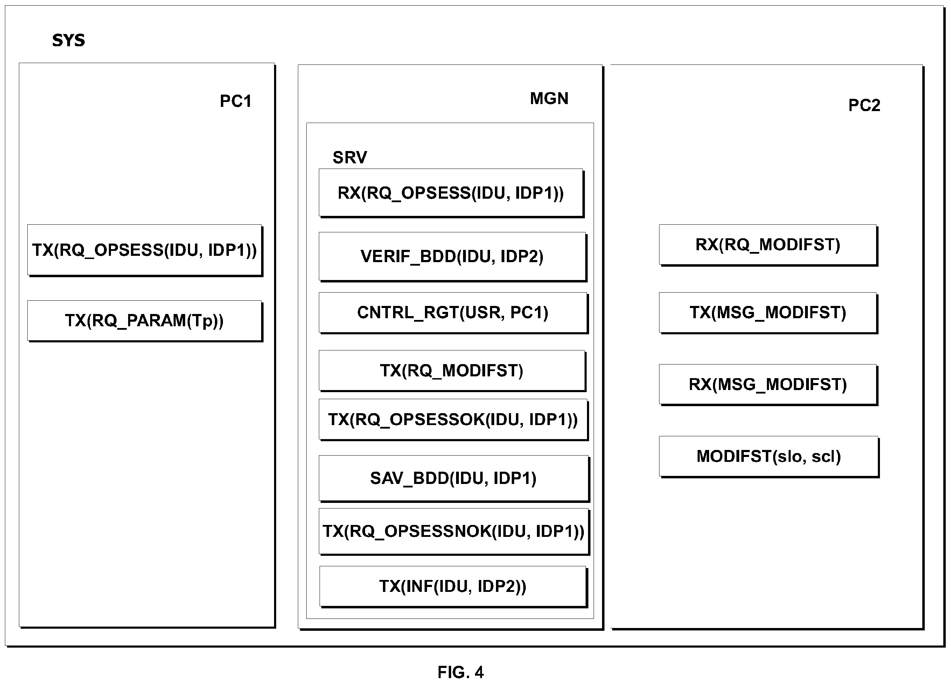

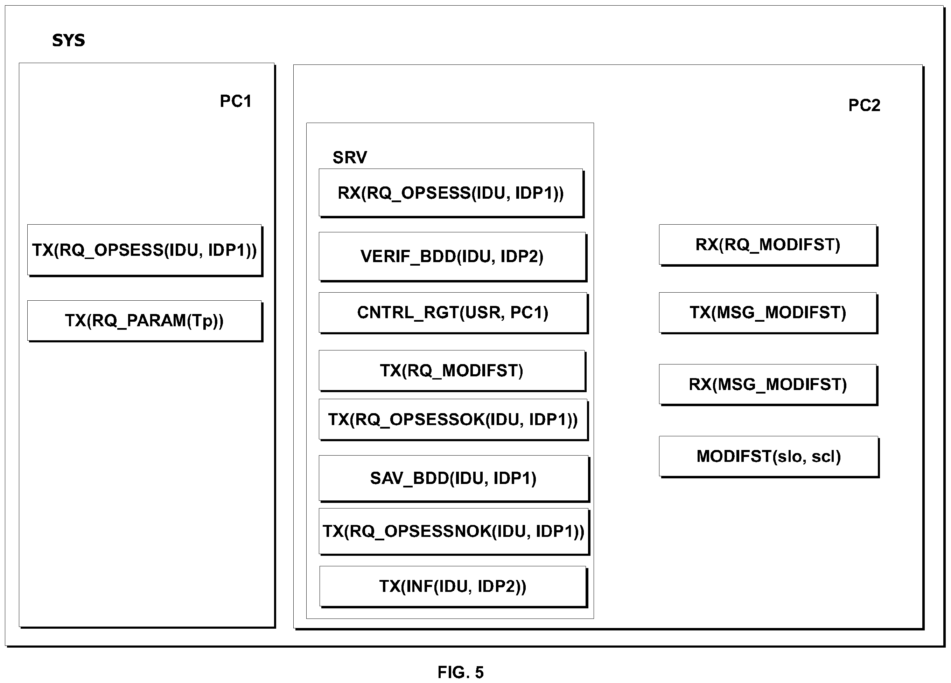

Les étapes du procédé d'ouverture de session sont décrites en détail ci-après en se référant aux figures 1b, 2a, 2b, 3, 4 et 5. On notera que les figures 3 et 4 se réfèrent à la Fig. 2a et la Fig. 5 se réfère à la Fig. 2b. Bien entendu, une figure similaire à la Fig. 3 peut être utilisée pour la Fig. 2b.

On notera que la deuxième machine PC2 comporte une interface utilisateur de gestion de session UI2, cette dernière étant située dans un module de gestion de session M2, tel qu'illustré à la Fig. 2a et à la Fig. 2b.

**Dans une première étape 1),** le service de contrôle de sessions SRV reçoit une requête d'ouverture de session RQ_OPSESS pour ladite première machine PC1, ladite requête comprenant au moins une information d'identification IDU d'un utilisateur USR.

On notera que cette information d'identification IDU permet d'identifier l'auteur de la demande d'ouverture de session DDE_OPSESS vue précédemment. Dans un exemple non limitatif, cette information d'identification IDU est un identifiant unique associé à l'utilisateur (couramment appelé en anglais « Global Unique Identifier »).

Dans des modes de réalisation non limitatifs, la requête d'ouverture de session RQ_OPSESS est une requête TCP/IP (« Transmission Control Protocol/Internet Protocol » en anglais) ou UDP («User Datagram Protocol » en anglais).

**Dans une deuxième étape 2),** le service de contrôle de sessions SRV vérifie si ladite au moins information d'identification IDU dudit utilisateur USR est associée dans un référentiel BDD à une donnée d'identification IDU de ladite deuxième machine PC2.

Ainsi, on vérifie dans le référentiel BDD s'il existe un couple IDU, IDP avec le même identifiant unique utilisateur IDU et un identifiant machine IDP qui est différent de la première machine PC1, ici qui est celui de la deuxième machine PC2.
Si c'est le cas, cela signifie que l'utilisateur USR a précédemment ouvert une session sur une autre machine, ici la deuxième machine PC2.
Bien entendu, cela sous-entend que lors de l'ouverture de session qui a été faite précédemment sur la deuxième machine PC2 par l'utilisateur USR, le service de contrôle de sessions SRV avait sauvegardé dans le référentiel BDD une information d'identification de l'utilisateur IDU ainsi qu'une donnée d'identification IDP2 de la deuxième machine PC2 associée.

Dans un mode de réalisation non limitatif, le référentiel BDD est géré par le service de contrôle de session SRV.
Dans le premier mode de réalisation où le service de contrôle de session SRV est compris dans une machine de gestion MGN, le référentiel BDD est compris dans ladite machine de gestion MGN.
Dans le deuxième mode de réalisation où le service de contrôle de session SRV est compris dans la deuxième machine PC2, le référentiel BDD est un référentiel distant.

On notera que la donnée d'identification IDP d'une machine permet d'identifier de manière unique ladite machine. Dans des exemples non limitatifs, une donnée d'identification IDU d'une machine est son nom, son adresse IP, ou encore son identifiant unique couramment appelé en anglais « Global Unique Identifier ».

**Dans une troisième étape 3),** le service de contrôle de sessions SRV contrôle si l'utilisateur USR a le droit d'ouvrir une session sur la première machine PC1.
On notera que le contrôle de droits d'un utilisateur pour ouvrir une session sur une machine étant connu de l'homme du métier, il n'est pas décrit ici.

**Dans une quatrième étape 4),** dans l'affirmative de ladite vérification et dudit contrôle (une session d'un utilisateur a été ouverte sur la deuxième machine PC2 et ce même utilisateur a le droit d'ouvrir une session sur la première machine PC1), le service de contrôle de sessions SRV envoie audit service de sécurité SES2 de ladite deuxième machine PC2 une requête de modification d'état de session RQ_MODIFST de ladite deuxième machine PC2.

La requête de modification d'état de session RQ_MODIFST est de type Tp verrouillage de session RQ_MODIFST(slo) ou fermeture de session RQ_MODIFST(scl).

Ainsi, soit la session sur la deuxième machine PC2 sera verrouillée, soit elle sera fermée.

Dans un premier mode de réalisation non limitatif, le type Tp d'une requête de modification d'état de session RQ_MODIFST est paramétré dans le service de contrôle de session SRV (étape 0 appelée PARAM(Tp) telle qu'illustrée en traits discontinus à la Fig. 1c). Ainsi, le choix entre la fermeture ou le verrouillage est effectué lors du paramétrage du service de contrôle de sessions SRV. Cela permet à un administrateur du parc de machines GRP de déterminer en amont si une session ouverte sur une autre machine doit être fermée ou seulement verrouillée.

Dans un deuxième mode de réalisation non limitatif, le choix de la fermeture/verrouillage est donné à l'utilisateur lui-même. Ainsi, l'interface utilisateur de gestion de session UI1 de la première machine PC1 est adaptée pour:
- informer l'utilisateur USR qu'il existe déjà une session ouverte sur la deuxième machine PC2 ; et
- à proposer audit utilisateur USR de choisir entre la fermeture ou le verrouillage de la session sur la deuxième machine PC2. Cela permet à un utilisateur USR de gérer lui-même ses sessions ouvertes sur les autres machines que la première machine PC1.
Ainsi, dans ce deuxième mode, le procédé d'ouverture de session comporte les étapes supplémentaires suivantes, telles qu'illustrées à la Fig. 1c :
- dans l'affirmative de la vérification (il existe une session ouverte sur la deuxième machine PC2), le service de contrôle de session SRV envoie à la première machine PC1, une information de confirmation INF de l'existence d'une session ouverte sur la deuxième machine PC2 (étape 2' appelée TX(INF(IDU, IDP2)) ; et
- suite au choix de l'utilisateur USR de fermer ou verrouiller la session sur la deuxième machine PC2, la première machine PC1 envoie au service de contrôle de session SRV une requête de paramétrage RQ_PARAM comprenant le type Tp de la requête de modification d'état de session RQ_MODIFST (étape 2" appelée TX(RQ_PARAM(Tp)), type choisi par l'utilisateur USR.

Ces deux étapes supplémentaires sont effectuées avant l'étape d'envoi de la requête de modification d'état de session RQ_MODIFST.

On notera que dans un mode de réalisation non limitatif, la première machine PC1 comporte à cet effet un service de sécurité SES1, tel qu'illustré sur la Fig. 2a et la Fig. 2b, adapté pour :
- recevoir l'information de confirmation INF de l'existence d'une session ouverte sur la deuxième machine PC2 ;
- envoyer la requête de paramétrage RQ_PARAM.

Dans des modes de réalisation non limitatifs, une requête de modification d'état de session RQ_MODIFST est une requête TCP/IP (« Transmission Control Protocol/Internet Protocol » en anglais) ou UDP («User Datagram Protocol » en anglais). Dans ce dernier cas, les requêtes sont appelées des datagrammes. Le protocole de communication UDP est un protocole simple qui permet d'envoyer des requêtes à une autre machine sans demande de communication préalable. Bien entendu, d'autres protocoles de communication permettant un envoi de requête entre deux machines peuvent être utilisés.

On notera que le service de sécurité SES2 est une tâche de fond qui fonctionne de façon indépendante d'une session utilisateur, c'est-à-dire même en l'absence d'une session utilisateur. Les moyens de sécurité SES2 sont donc un produit programme d'ordinateur qui fonctionne de façon indépendante d'une session utilisateur.
Ainsi, le fait que le service de sécurité SES2 soit autonome du module utilisateur de gestion de session M2 de la deuxième machine PC2 (module de gestion de session M2 qui gère les sessions utilisateurs) permet d'éviter que ledit service de sécurité SES2 ne s'arrête de fonctionner lorsque ledit module utilisateur de gestion de session M2 n'est plus actif comme c'est le cas avec certains systèmes d'exploitation (non représenté sur les figures) tel que par exemple Windows Vista^{™} sur lesquels s'appuie ledit module M2.

Par ailleurs, on notera que de manière générale, les droits d'un utilisateur sur une machine sont limités à certain environnement et donc à certaines actions.
Comme le service de sécurité SES2 est indépendant de la session utilisateur, l'interface utilisateur de gestion de session UI2 n'a pas les mêmes droits que ledit service de sécurité SES2 et n'a donc pas accès aux actions exécutées par le service de sécurité SES2.

Les explications données ci-dessus pour le service de sécurité SES2 de la deuxième machine PC2 s'appliquent au service de sécurité SES1 de la première machine PC1.

On notera que si la vérification effectuée à la deuxième étape est négative (aucune session n'a été ouverte sur la deuxième machine PC2), la troisième étape est tout de même effectuée (comme illustré sur les figures 1a à 1d). En effet, les droits de l'utilisateur USR pour ouvrir une session sur la première machine PC1 doivent de toute manière être contrôlés. Les étapes 7) et 8) décrites ci-après sont également effectuées.

Par ailleurs, on notera que si le contrôle effectué à la troisième étape est négatif (l'utilisateur n'a pas les droits pour ouvrir une session sur la première machine PC1), le service de contrôle de sessions SRV envoie à la première machine PC1 une requête d'interdiction d'ouverture de session RQ_OPSESSOK (neuvième étape TX(RQ_OPSESSNOK(IDU, IDP1) illustrée sur les figures 1 a à 1 d).

Sur réception de la requête de modification d'état de session RQ_MODIFST par le service de sécurité SES2 de la deuxième machine PC2, **dans une cinquième étape 5),** comme illustré sur les figures 1b, 1c, 1d ou à la Fig.3, ledit service de sécurité SES2 envoie un message applicatif de modification d'état de session MSG_MODIFST correspondant à la requête de modification d'état de session RQ_MODIFST au module de gestion de session M2 de la deuxième machine PC2.

On notera qu'un message applicatif de modification d'état de session MSG_MODIFST est un message applicatif qui est défini en fonction du module de gestion de session M2 de la deuxième machine PC2 et plus particulièrement en fonction de l'interface utilisateur de gestion de session UI2.
Ainsi, par exemple, dans le cas d'une interface utilisateur de gestion de session Windows^{™}, un message de modification d'état de session est une notification généré par Windows. Dans un autre exemple, dans le cas d'une interface utilisateur de gestion de session Linux^{™}, un message de modification d'état de session est un événement généré par Linux^{™}.

Dans un premier mode de réalisation non limitatif, le message applicatif de modification d'état de session MSG_MODIFST est directement envoyé à l'interface utilisateur de gestion de session UI2 du module de gestion de session M2, tel qu'illustré sur la Fig. 3 par un flèche en trait plein (étape TX(MSG_MODIFST)). Sur réception de ce message, ladite interface UI2 appelle une fonction de modification d'état de session bas niveau, FCTv(slo) pour la fonction de verrouillage ou FCTc(scl) pour la fonction de fermeture, du système d'exploitation (non représenté) de ladite deuxième machine PC2.

Dans un deuxième mode de réalisation non limitatif, le message applicatif de modification d'état de session MSG_MODIFST est envoyé à un greffon PLGN2 du module de gestion de session M2, tel qu'illustré sur la Fig. 3 par une flèche sous forme de tirets (étape TX(MSG_MODIFST)). Le greffon PLGN2, couramment appelé « Plugin » en anglais, sollicite alors l'interface utilisateur de gestion de session UI2 du module de gestion de session M2. Sur cette sollicitation, l'interface UI2 appelle la fonction de modification d'état de session bas niveau, FCTv(slo) pour la fonction de verrouillage) ou FCTc(scl) pour la fonction de fermeture, du système d'exploitation (non représenté) de ladite deuxième machine PC2.

L'utilisation d'un greffon PLGN2 évite de modifier l'interface utilisateur de gestion de session existante dans une machine pour intégrer une fonction de réception d'un message applicatif MSG_MODIFST ou de la remplacer par une nouvelle interface utilisateur de gestion de session intégrant la fonction de réception d'un message applicatif MSG_MODIFST, comme c'est le cas dans le premier mode de réalisation ci-dessus.

Dans un exemple non limitatif, les fonctions de modification d'état de session bas niveau FCTv(slo), FCTc(scl) se trouvent dans une bibliothèque de liens dynamique. Selon les types de systèmes d'exploitation, cette bibliothèque aura une extension différente (par exemple .dll pour « dynamic link library » en anglais ; .so pour « shared object » en anglais ; .dylib pour « dynamic library » en anglais ; .a pour « archive » en anglais ; .sl « pour shared library » en anglais ; .sa pour « archive » en anglais). De telles bibliothèques étant connues de l'homme du métier, elles ne sont pas décrites plus en détail ici.
Dans un autre exemple non limitatif, les fonctions de modification d'état de session bas niveau FCTv(slo), FCTc(scl) sont des fonctions binaires. Dans ce cas, contrairement aux bibliothèques de liens dynamiques, elles nécessitent une recompilation du module utilisateur de gestion de session M2.

Ainsi, **dans une sixième étape 6),** sur réception du message applicatif de modification d'état de session MSG_MODIFST, ledit module de gestion de session M2 procède à ladite modification d'état de session (étape MODIFST(slo, scl) illustrée aux figures 1b, 1c, 1d et à la Fig. 3).
Le module utilisateur de gestion de session M2 est un ensemble de produits programmes d'ordinateur permettant de réaliser la fonction de gestion de sessions utilisateurs et notamment la modification d'état de session.
En particulier, cette modification d'état de session est effectuée par l'interface utilisateur de gestion de session UI2 avec la fonction bas niveau FCTv(slo) ou FCTc(scl), comme expliqué ci-dessus.
Ainsi, dans l'exemple pris, la session ouverte par l'utilisateur USR sur la deuxième machine PC2 est soit verrouillée (état verrouillé ST=slo), soit fermée (état fermé ST=scl).
On rappelle que lorsqu'une la session utilisateur est verrouillée, cela signifie qu'aucune action utilisateur n'est possible, mis à part via le clavier de la deuxième machine PC2 par lequel la seule action possible est la réactivation de la session utilisateur en entrant l'identifiant utilisateur et le mot de passe associé de l'utilisateur USR.

**Dans une septième étape 7),** si la modification d'état de session de la deuxième machine PC2 se réalise, le service de contrôle de sessions SRV envoie à la première machine PC1 une requête d'autorisation d'ouverture de session RQ_OPSESSOK.

Finalement, une session est ouverte sur la première machine PC1. On notera que la première machine PC1 comporte également un module de gestion de session M1, tel qu'illustré sur la Fig. 2a et la Fig. 2b, adapté pour effectuer l'ouverture de session sur réception d'une requête d'autorisation d'ouverture de session (non représentée) du service de contrôle de sessions SRV. Ce module de gestion de session M1 comporte l'interface utilisateur de gestion de session UI1.
On notera que dans un mode de réalisation non limitatif, lorsque la première machine PC1 comporte un service de sécurité SES1, ledit service de sécurité reçoit cette requête d'autorisation d'ouverture de session RQ_OPSSSOK.

**Dans une huitième étape 8),** le service de contrôle de sessions SRV, sauvegarde dans ledit référentiel BDD ladite au moins information d'identification IDU dudit utilisateur USR associée à une donnée d'identification IDP de ladite première machine PC1.

Ainsi, cela permet d'enregistrer le fait que l'utilisateur USR a ouvert une session sur la première machine PC1.

Dans un exemple non limitatif, le référentiel BDD est un annuaire LDAP géré par un administrateur du parc de machines GRP.

On notera que suite à la réception d'un message applicatif de modification d'état de session MSG_MODIFST tel que décrit à l'étape 6), une modification d'état de session qui correspond à une fermeture de session de la deuxième machine PC2 peut échouer, dans le cas où une application est ouverte et refuse de se terminer, par exemple lorsque des documents sont déjà ouverts sous cette session. On notera que dans ce cas, le type de fermeture de session est classique, c'est-à-dire qu'elle ne termine pas de manière forcée une application.

Dans ce cas, **dans une neuvième étape 9),** dans un premier mode de réalisation non limitatif, si la modification d'état de session de la deuxième machine PC2 échoue, le service de contrôle de sessions SRV envoie à la première machine PC1 une requête d'interdiction d'ouverture de session RQ_OPSESSOK (étape TX(RQ_OPSESSNOK(USR, IDP1) illustrée sur les figures 1a à 1c et à la Fig. 3).

Dans un deuxième mode de réalisation non limitatif, tel qu'illustré sur la Fig. 1d, si la modification d'état de session de la deuxième machine PC2 correspondant à une fermeture de session échoue, le service de contrôle de sessions SRV envoie audit service de sécurité SES2 de ladite deuxième machine PC2 une requête de modification d'état de session RQ_MODIFST de ladite deuxième machine PC2 qui est de type Tp verrouillage de session (ST=slo). Les étapes 4) à 8) décrites précédemment sont alors effectuées. Ainsi, en cas d'échec d'une fermeture de session, la session sur la deuxième machine PC2 est au moins verrouillée.

On notera que les étapes de vérification et d'envoi de la requête de modification d'état de session décrites ci-dessus sont effectuées pour toute machine PC appartenant au parc de machines GRP et différente de la première machine. Ainsi, dans le parc de machines, il n'existera qu'une seule session utilisateur d'un même utilisateur qui sera soit déverrouillée, soit ouverte. Les machines du parc de machines sont ainsi sécurisées. Une tierce personne ne pourra utiliser de manière illicite la session utilisateur de l'utilisateur lorsque ce dernier n'utilise plus sa session, et les machines ne seront pas occupées inutilement par des sessions utilisateurs non usitées.

Ainsi, le procédé d'ouverture de session évite que plusieurs sessions au nom d'un même utilisateur ne soient déverrouillées sur plusieurs machines à la fois (lorsque la modification d'état de session est un verrouillage). Cela permet de sécuriser les accès aux applications des machines.

Ainsi, le procédé d'ouverture de session évite que plusieurs sessions au nom d'un même utilisateur ne soient ouvertes sur plusieurs machines à la fois (lorsque la modification d'état de session est une fermeture). Cela évite de mobiliser des machines inutilement.

Le procédé d'ouverture de session est mis en oeuvre par les moyens de contrôle de sessions SRV pour un parc de machines PC1, PC2 adaptés pour effectuer une ouverture de session d'une première machine PC1, ledit parc de machines comprenant au moins ladite première machine PC1 et une deuxième machine PC2, ladite deuxième machine PC2 comportant des moyens de sécurité SES2.

Les moyens de contrôle de sessions SRV sont adaptés pour :
- recevoir une requête d'ouverture de session RQ_OPSESS de ladite première machine PC1, ladite requête comprenant au moins une information d'identification IDU d'un utilisateur USR ;
- vérifier si ladite au moins information d'identification IDU dudit utilisateur USR est associée dans un référentiel BDD à une donnée d'identification IDU de ladite deuxième machine PC2 ;
- contrôler si l'utilisateur USR a le droit d'ouvrir une session sur la première machine PC1 ;
- dans l'affirmative de ladite vérification et dudit contrôle, envoyer auxdits moyens de sécurité SES2 de ladite deuxième machine PC2 une requête de modification d'état de session RQ_MODIFST de ladite deuxième machine PC2 ;
- si la modification d'état de session de la deuxième machine PC2 se réalise, envoyer à la première machine PC1 une requête d'autorisation d'ouverture de session RQ_OPSESSOK ; et
- sauvegarder dans ledit référentiel BDD ladite au moins information d'identification IDU dudit utilisateur USR associée à une donnée d'identification IDP de ladite première machine PC1.

Un système informatique SYS adapté pour effectuer une ouverture de session de la première machine PC1 par des moyens de contrôle de sessions SRV pour un parc de machines PC1, PC2 comprenant au moins ladite première machine PC1 et une deuxième machine PC2, ladite deuxième machine PC2 comportant un module de gestion de session M2, est illustré selon un premier mode de réalisation non limitatif à la Fig. 2a et à la Fig. 4, et selon un deuxième mode de réalisation à la Fig.2b et à la Fig. 5.

Le système informatique SYS comprend :
- les moyens de contrôle de sessions SRV adapté pour coopérer avec la première machine PC1 et la deuxième machine PC2 ;
- ladite deuxième machine PC2 adaptée pour recevoir des moyens de contrôle de sessions SRV via lesdits moyens de sécurité SES2 une requête de modification d'état de session RQ_MODIFST ; et
- ladite première machine PC1 adaptée pour :
   - émettre une requête d'ouverture de session RQ_OPSESS vers lesdits moyens de contrôle de sessions SRV ; et
   - si la modification d'état de session de la deuxième machine PC2 se réalise, recevoir desdits moyens de contrôle de sessions SRV une requête d'autorisation d'ouverture de session RQ_OPSESSOK.

Dans un premier mode de réalisation non limitatif, une machine de gestion MGN d'un parc de machines PC1, PC2 comprend lesdits moyens de contrôle de sessions SRV, telle qu'illustrée sur les figures 2a, 3 et 4. Elle est ainsi adaptée pour coopérer avec la première machine PC1 et la deuxième machine PC2. La machine de gestion MGN est ainsi adaptée pour effectuer une ouverture de session d'une première machine PC1 par les moyens de contrôle de sessions SRV pour ledit parc GRP de machines PC1, PC2 comprenant au moins ladite première machine PC1 et une deuxième machine PC2, ladite deuxième machine PC2 comportant des moyens de sécurité SES2.
La machine de gestion MGN, la première machine PC1 et la deuxième machine PC2 forment le système informatique SYS.

Dans un deuxième mode de réalisation non limitatif, la deuxième machine PC2 comprend lesdits moyens de contrôle de sessions SRV, telle qu'illustrée sur les figures 2b et 5.

Dans un mode de réalisation non limitatif illustré sur la Fig. 2a et la Fig. 2b sous forme de traits et cadre illustrés par des tirets, le module de gestion de session M2 de la deuxième machine PC2 comprend :
- un greffon PLGN2 adapté pour recevoir un message applicatif de modification d'état de session MSG_MODIFST correspondant à une requête de modification d'état de session RQ_MODIFST envoyée par les moyens de contrôle de sessions SRV ; et
- une interface utilisateur de gestion de session UI2 adaptée à être sollicitée par ledit greffon PLGN2 pour modifier l'état de session ladite deuxième machine PC2.

Bien entendu la description n'est pas limitée à l'application, aux modes de réalisation et aux exemples décrits ci-dessus.
- Ainsi, dans un mode de réalisation non limitatif, l'envoi d'une requête RQ peut s'effectuer par un protocole de communication autre que TCP/IP ou UDP. Tout protocole de communication qui permet un échange de données sur un réseau informatique entre plusieurs machines peut être utilisé.
- Ainsi, le procédé décrit peut être utilisé dans des applications autres que celle décrite du domaine hospitalier. Par exemple il peut s'appliquer dans le cadre d'une gestion d'un parc de machines :
   - d'une centrale nucléaire,
   - d'un réseau téléphonique,
   - d'un réseau ferroviaire,
   - dans une tour de contrôle,
   - dans un parc d'ascenseurs etc....
et de manière générale dans toute application permettant l'ouverture de session sur plusieurs machines par un même utilisateur.

Ainsi, l'invention décrite présente notamment les avantages suivants :
- elle est simple à mettre en oeuvre ;
- elle permet de verrouiller ou fermer de manière centralisée via le service de contrôle de sessions des sessions utilisateur ouverts par un même utilisateur sur différentes machines ;
- elle permet ainsi de sécuriser les machines d'un même parc de machines (lorsque la modification d'état de session est un verrouillage ou une fermeture) ;
- elle permet de réduire le nombre de ressources utilisées (machines, applications, etc.) (lorsque la modification d'état de session est une fermeture) ;
- elle pallie l'oubli d'un utilisateur de verrouiller ou fermer sa session sur une machine ;
- elle est sécurisée du fait du service de sécurité SES1, SES2, respectivement de la première, deuxième machine, qui se trouve à l'extérieur du module utilisateur de gestion de session M1, M2 et qui est donc indépendant de ce dernier ; et
- elle donne le choix entre une fermeture ou un verrouillage de session, ce choix étant déterminé soit en amont par paramétrage, soit par l'utilisateur lui-même.

## Revendications

1. Procédé d'ouverture de session d'une première machine (PC1) par des moyens de contrôle de sessions (SRV) pour un parc (GRP) de machines (PC1, PC2) comprenant au moins ladite première machine (PC1) et une deuxième machine (PC2), ladite deuxième machine (PC2) comportant des moyens de sécurité (SES2), le procédé comportant les étapes de :
- recevoir par les moyens de contrôle de sessions (SRV) une requête d'ouverture de session (RQ_OPSESS) de ladite première machine (PC1), ladite requête comprenant au moins une information d'identification (IDU) d'un utilisateur (USR) ;
- vérifier par les moyens de contrôle de sessions (SRV) si ladite au moins information d'identification (IDU) dudit utilisateur (USR) est associée dans un référentiel (BDD) à une donnée d'identification (IDU) de ladite deuxième machine (PC2) ;
- contrôler par les moyens de contrôle de sessions (SRV) si l'utilisateur (USR) a le droit d'ouvrir une session sur la première machine (PC1) ;
- dans l'affirmative de ladite vérification et dudit contrôle, envoyer par les moyens de contrôle de sessions (SRV) auxdits moyens de sécurité (SES2) de ladite deuxième machine (PC2) une requête de modification d'état de session (RQ_MODIFST) de ladite deuxième machine (PC2), la requête de modification d'état de session (RQ_MODIFST) étant de type (Tp) verrouillage de session (RQ_MODIFST (slo)) ou fermeture de session (RQ_MODIFST(scl));
- d'envoyer par la première machine (PC1) aux moyens de contrôle de session (SRV) une requête de paramétrage comprenant le type (Tp) de la requête de modification d'état de session (RQ_MODIFST) ;
- si la modification d'état de session de la deuxième machine (PC2) se réalise, envoyer par les moyens de contrôle de sessions (SRV) à la première machine (PC1) une requête d'autorisation d'ouverture de session (RQ_OPSESSOK) ;
- sauvegarder dans ledit référentiel (BDD) par les moyens de contrôle de sessions (SRV) ladite au moins information d'identification (IDU) dudit utilisateur (USR) associée à une donnée d'identification (IDP) de ladite première machine (PC1).

2. Procédé d'ouverture de session selon la revendication 1, selon lequel le type (Tp) d'une requête de modification d'état de session (RQ_MODIFST) est paramétré dans les moyens de contrôle de session (SRV).

3. Procédé d'ouverture de session selon la revendication précédente, selon lequel il comporte une étape supplémentaire d'envoyer par les moyens de contrôle de sessions (SRV) auxdits moyens de sécurité (SES2) de ladite deuxième machine (PC2) une requête de modification d'état de session (RQ_MODIFST) de ladite deuxième machine (PC2) qui est de type (Tp) verrouillage de session si la modification d'état de session de la deuxième machine (PC2) correspondant à une fermeture de session échoue.

4. Procédé d'ouverture de session selon l'une quelconque des revendications précédentes, selon lequel une requête (RQ_OPSESS, RQ_OPSESSOK, RQ_MODIFST) reçue ou émise par les moyens de contrôle de sessions (SRV) est une requête TCP/IP ou UDP.

5. Procédé d'ouverture de session selon l'une quelconque des revendications précédentes, selon lequel il comporte une étape supplémentaire d'envoyer un message applicatif de modification d'état de session (MSG_MODIFST) correspondant à la requête de modification d'état de session (RQ_MODIFST) à un module de gestion de session (M2) de la deuxième machine (PC2).

6. Procédé d'ouverture de session selon l'une quelconque des revendications précédentes, selon lequel il comporte une étape supplémentaire d'envoyer un message applicatif de modification d'état de session (MSG_MODIFST) correspondant à la requête de modification d'état de session (RQ_MODIFST) à un greffon (PLGN2) d'un module de gestion de session (M2) de la deuxième machine (PC2).

7. Procédé d'ouverture de session selon l'une quelconque des revendications précédentes, selon lequel les étapes de vérification et d'envoi de la requête de modification d'état de session (RQ_MODIFST) sont effectuées pour toute machine appartenant au parc de machines (GRP) et différente de la première machine (PC1).

8. Produit programme comportant une ou plusieurs séquences d'instructions exécutables par une unité de traitement d'information, l'exécution desdites séquences d'instructions permettant une mise en oeuvre du procédé d'ouverture de session selon l'une quelconque des revendications précédentes, lorsqu'il est chargé sur un ordinateur.

9. Machine de gestion (MGN) d'un parc de machines (PC1, PC2) adaptée pour effectuer une ouverture de session d'une première machine (PC1) par des moyens de contrôle de sessions (SRV) pour ledit parc (GRP) de machines (PC1, PC2) comprenant au moins ladite première machine (PC1) et une deuxième machine (PC2), ladite deuxième machine (PC2) comportant des moyens de sécurité (SES2), ladite machine de gestion (MGN) comprenant lesdits moyens de contrôle de sessions (SRV), lesdits moyens de contrôle de sessions adaptés pour :
- recevoir une requête d'ouverture de session (RQ_OPSESS) de ladite première machine (PC1), ladite requête comprenant au moins une information d'identification (IDU) d'un utilisateur (USR) ;
- vérifier si ladite au moins information d'identification (IDU) dudit utilisateur (USR) est associée dans un référentiel (BDD) à une donnée d'identification (IDU) de ladite deuxième machine (PC2) ;
- contrôler si l'utilisateur (USR) a le droit d'ouvrir une session sur la première machine (PC1) ;
- dans l'affirmative de ladite vérification et dudit contrôle, envoyer auxdits moyens de sécurité (SES2) de ladite deuxième machine (PC2) une requête de modification d'état de session (RQ_MODIFST) de ladite deuxième machine (PC2), la requête de modification d'état de session (RQ_MODIFST) étant de type (Tp) verrouillage de session (RQ_MODIFST (slo)) ou fermeture de session (RQ_MODIFST(scl)) ;
- envoyer par la première machine (PC1) aux moyens de contrôle de session (SRV) une requête de paramétrage comprenant le type (Tp) de la requête de modification d'état de session (RQ_MODIFST) ;
- si la modification d'état de session de la deuxième machine (PC2) se réalise, envoyer à la première machine (PC1) une requête d'autorisation d'ouverture de session (RQ_OPSESSOK) ; et
- sauvegarder dans ledit référentiel (BDD) ladite au moins information d'identification (IDU) dudit utilisateur (USR) associée à une donnée d'identification (IDP) de ladite première machine (PC1).

## Patentansprüche

1. Session-Eröffnungsverfahren einer ersten Maschine (PC1) durch Session-Steuermittel (SRV) für einen Park (GRP) von Maschinen (PC1, PC2), umfassend wenigstens die genannte erste Maschine (PC1) und eine zweite Maschine (PC2), wobei die genannte zweite Maschine (PC2) Sicherheitsmittel (SES2) umfasst, wobei das Verfahren die Schritte umfasst:
- durch das Session-Steuermittel (SRV) eine Session-Eröffnungsanfrage (RQ_OPSESS) von der genannten ersten Maschine (PC1) empfangen, wobei die genannte Anfrage wenigstens eine Kennungsinformation (I-DU) eines Benutzers (USR) umfasst;
- durch die Session-Steuermittel (SRV) überprüfen, ob die genannte wenigstens eine Kennungsinformation (IDU) des genannten Benutzers (USR) in einem Bezugssystem (BDD) einer Kennungsangabe (IDU) der genannten zweiten Maschine (PC2) zugeordnet ist;
- durch die Session-Steuermittel (SRV) kontrollieren, ob der Benutzer (USR) berechtigt ist, eine Session auf der ersten Maschine (PC1) zu eröffnen;
- wenn die genannte Überprüfung und die genannte Kontrolle positiv sind, durch die Session-Steuermittel (SRV) an die genannten Sicherheitsmittel (SES2) der genannten zweiten Maschine (PC2) eine Änderungsanfrage des Sessionzustandes (RQ_MODIFST) der genannten zweiten Maschine (PC2) senden, wobei die Änderungsanfrage des Sessionzustandes (RQ_MODIFST) von dem Typ (Tp) Verriegelung der Session (RQ_MODIFST (slo)) oder Logout der Session (RQ_MODIFST (scl)) ist;
- durch die erste Maschine (PC1) an die Steuermittel der Session (SRV) eine Parametrierungsanfrage senden, umfassend den Typ (Tp) der Änderungsanfrage des Sessionzustandes (RQ_MODIFST);
- wenn die Änderung des Sessionzustandes der zweiten Maschine (PC2) durchgeführt wird, durch die Session-Steuermittel (SRV) an die erste Maschine (PC1) eine Zulassungsanfrage zur Öffnung der Session (RQ_OPSESSOK) senden;
- in dem genannten Bezugssystem (BDD) durch die Session-Steuermittel (SRV) die genannte wenigstens eine Kennungsinformation (IDU) des genannten Benutzers (USR) abspeichern, die einer Kennungsangabe (IDP) der genannten ersten Maschine (PC1) zugeordnet ist.

2. Session-Eröffnungsverfahren gemäß Anspruch 1, gemäß dem der Typ (Tp) einer Änderungsanfrage des Sessionzustandes (RQ_MODIFST) in den Session-Steuermitteln (SRV) parametriert ist.

3. Session-Eröffnungsverfahren gemäß dem voranstehenden Anspruch, gemäß dem es einen zusätzlichen Schritt des Versands durch Session-Steuermittel (SRV) an die genannten Sicherheitsmittel (SES2) der genannten zweiten Maschine (PC2) einer Änderungsanfrage des Sessionzustandes (RQ_MODIFST) der genannten zweiten Maschine (PC2) umfasst, die vom Typ (Tp) Verriegelung der Session ist, wenn die Änderung des Sessionzustandes der zweiten Maschine (PC2), die einem Logout aus der Session entspricht fehlschlägt.

4. Session-Eröffnungsverfahren gemäß irgendeinem der voranstehenden Ansprüche, gemäß dem eine Anfrage (RQ_OPSESS, RQ_OPSESSOK, RQ_MODIFST), die durch Session-Steuermittel (SRV) empfangen oder ausgegeben wird, eine TCP/IP- oder UDP-Anfrage ist.

5. Session-Eröffnungsverfahren gemäß irgendeinem der voranstehenden Ansprüche, gemäß dem es einen zusätzlichen Schritt des Versandes einer Anwendungsnachricht der Zustandsänderung einer Session (MSG_MODIFST) umfasst, die der Änderungsanfrage des Sessionzustandes (RQ_MODIFST) an ein Session-Managementmodul (M2) der zweiten Maschine (PC2) entspricht.

6. Session-Eröffnungsverfahren gemäß irgendeinem der voranstehenden Ansprüche, gemäß dem es einen zusätzlichen Schritt des Versandes einer Anwendungsnachricht der Änderung des Sessionzustandes (MSG_MODIFST) umfasst, der der Änderungsanfrage des Sessionzustandes (RQ_MODIFST) an ein Plug-In (PLGN2) eines Session-Managementmoduls (M2) der zweiten Maschine (PC2) entspricht.

7. Session-Eröffnungsverfahren gemäß irgendeinem der voranstehenden Ansprüche, gemäß dem die Überprüfungs- und Versandschritte der Änderungsanfrage des Sessionzustandes (RQ_MODIFST) für jede Maschine durchgeführt werden, die zu dem Maschinenpark (GRP) gehört und von der ersten Maschine (PC1) unterschiedlich ist.

8. Programmprodukt, umfassend eine oder mehrere Anweisungssequenzen, die durch eine Informationsverarbeitungseinheit ausführbar sind, wobei die Ausführung der genannten Anweisungssequenzen eine Umsetzung des Session-Eröffnungsverfahrens gemäß irgendeinem der voranstehenden Ansprüche zulässt, wenn es auf einen Computer geladen wird.

9. Verwaltungsmaschine (MGN) eines Maschinenparks (PC1, PC2), die zur Durchführung einer Eröffnung einer Session einer ersten Maschine (PC1) durch Session-Steuermittel (SRV) für den genannten Park (GRP) von Maschinen (PC1, PC2) geeignet ist, der wenigstens die genannte erste Maschine (PC1) und eine zweite Maschine (PC2) umfasst, wobei die genannte zweite Maschine (PC2) Sicherheitsmittel (SES2) umfasst, wobei die genannte Verwaltungsmaschine (MGN) die genannten Session-Steuermittel (SRV) umfasst, wobei die genannten Session-Steuermittel geeignet sind, um:
- eine Session-Eröffnungsanfrage (RQ_OPSESS) der genannten ersten Maschine (PC1) zu empfangen, wobei die genannte Anfrage wenigstens eine Kennungsinformation (IDU) eines Benutzers (USR) umfasst;
- zu überprüfen, ob die genannte wenigstens eine Kennungsinformation (IDU) des genannten Benutzers (USR) in einem Bezugssystem (BDD) einer Kennungsangabe (IDU) der genannten zweiten Maschine (PC2) zugeordnet ist;
- zu kontrollieren, ob der Benutzer (USR) berechtigt ist, eine Session auf der ersten Maschine (PC1) zu eröffnen;
- wenn die genannte Überprüfung und die genannte Kontrolle positiv sind, an die genannten Sicherheitsmittel (SES2) der genannten zweiten Maschine (PC2) eine Änderungsanfrage des Sessionzustandes (RQ_MODIFST) der genannten zweiten Maschine (PC2) zu senden, wobei die Änderungsanfrage des Sessionzustandes (RQ_MODIFST) von dem Typ (Tp) Verriegelung der Session (RQ_MODIFST (slo)) oder Logout der Session (RQ_MODIFST (scl)) ist;
- durch die erste Maschine (PC1) an die Session-Steuermittel (SRV) eine Parametrierungsanfrage zu senden, umfassend den Typ (Tp) der Änderungsanfrage des Sessionzustandes (RQ_MODIFST);
- wenn die Änderung des Sessionzustandes der zweiten Maschine (PC2) durchgeführt wird, Versand einer Zulassungsanfrage zur Eröffnung der Session (RQ_OPSESSOK) an die erste Maschine (PC1); und
- Abspeichern der genannten wenigstens einen Kennungsinformation (I-DU) des genannten Benutzers (USR), die einer Kennungsangabe (IDP) der genannten ersten Maschine (PC1) zugeordnet ist, in dem genannten Bezugssystem (BDD).

## Claims

1. A method for initiating a session of a first machine (PC1) by session control means (SRV) for a cluster (GRP) of machines (PC1, PC2) comprising at least said first machine (PC1) and a second machine (PC2), said second machine (PC2) including security means (SES2), the method including the steps of:
- receiving by the session control means (SRV) a session initiation request (RQ_OPSESS) from said first machine (PC1), said request comprising at least one identification information (IDU) of a user (USR);
- checking by the session control means (SRV) whether said at least one identification information (IDU) of said user (USR) is associated in a repository (BDD) with an identification datum (IDU) of said second machine (PC2);
- controlling by the session control means (SRV) whether the user (USR) is allowed to initiate a session on the first machine (PC1);
- if said checking and said controlling are positive, sending by the session control means (SRV) to said security means (SES2) of said second machine (PC2) a session state modification request (RQ_MODIFST) of said second machine (PC2), the session state modification request (RQ_MODIFST) being of the session locking (RQ_MODIFST (slo)) or session logout (RQ_MODIFST (scl)) type (Tp);
- sending by the first machine (PC1) to the session control means (SRV) a parametering request comprising the type (Tp) of the session state modification request (RQ_MODIFST);
- if the session state modification of the second machine (PC2) is carried out, sending by the session control means (SRV) to the first machine (PC1) a session initiation authorization request (RQ_OPSESSOK);
- saving in said repository (BDD) by the session control means (SRV) said at least one identification information (IDU) of said user (USR) associated with an identification datum (IDP) of said first machine (PC1).

2. The method for initiating a session according to claim 1, wherein the type (Tp) of a session state modification request (RQ_MODIFST) is parameterised in the session control means (SRV).

3. The method for initiating a session according to previous claim, wherein it includes a further step of sending by the session control means (SRV) to said security means (SES2) of said second machine (PC2) a session state modification request (RQ_MODIFST) of said second machine (PC2) which is of the session locking type (Tp) if the session state modification of the second machine (PC2) corresponding to a session logout fails.

4. The method for initiating a session according to any of the previous claims, wherein a request (RQ_OPSESS, RQ_OPSESSOK, RQ_MODIFST) received or transmitted by the session control means (SRV) is a TCP/IP or UDP request.

5. The method for initiating a session according to any of the previous claims, wherein it includes a further step of sending a session state modification application-oriented message (MSG_MODIFST) corresponding to the session state modification request (RQ_MODIFST) to a session management module (M2) of the second machine (PC2).

6. The method for initiating a session according to any of the previous claims, wherein it includes a further step of sending a session state modification application-oriented message (MSG_MODIFST) corresponding to the session state modification request (RQ_MODIFST) to a plugin (PLGN2) of a session management module (M2) of the second machine (PC2).

7. The method for initiating a session according to any of the previous claims, wherein the steps of checking and sending the session state modification request (RQ_MODIFST) are performed for any machine belonging to the cluster of machines (GRP) and different from the first machine (PC1).

8. A software package including one or more sequences of instructions executable by an information processing unit, said execution of said sequences of instructions enabling an implementation of the session initiation method according to any of the previous claims, when loaded on a computer.

9. A machine for managing (MGN) a cluster of machine (PC1, PC2) adapted to perform a session initiation of a first machine (PC1) by session control means (SRV) for said cluster (GRP) of machines (PC1, PC2) comprising at least said first machine (PC1) and a second machine (PC2), said second machine (PC2) including security means (SES2), said managing machine (MGN) comprising said session control means (SRV), said session control means being adapted to:
- receive a session initiation request (RQ_OPSESS) of said first machine (PC1), said request comprising at least one identification information (IDU) of a user (USR);
- check whether said at least one identification information (IDU) of said user (USR) is associated in a repository (BDD) with an identification datum (IDU) of said second machine (PC2);
- control whether the user (USR) is allowed to initiate a session on the first machine (PC1);
- if said checking and said controlling are positive, send to said security means (SES2) of said second machine (PC2) a session state modification request (RQ_MODIFST) of said second machine (PC2), the session state modification request (RQ_MODIFST) being of the session locking (RQ_MODIFST (slo)) or session logout (RQ_MODIFST (scl)) type (Tp);
- send by the first machine (PC1) to the session control means (SRV) a parametering request comprising the type (Tp) of the session state modification request (RQ_MODIFST);
- if the session state modification of the second machine (PC2) is carried out, send to the first machine (PC1) a session initiation authorization request (RQ_OPSESSOK); and
- save in said repository (BDD) said at least one identification information (IDU) of said user (USR) associated with an identification datum (IDP) of said first machine (PC1).
